# EUROPEAN PATENT SPECIFICATION

(11) **EP 0 277 672 B1**
(45) Date of publication and mention of the grant of the patent: **19.10.1994**
(21) Application number: 88200044.1
(22) Date of filing: 14.01.1988
(51) Int. Cl.: D06B 9/06

(54) **Equipment for the closed-loop deodorization and cooling of a fabric, in machines for continuous textile treatment with solvents**
Anlage zur Geruchsveredlung und Abkühlung eines Gewebes
Installation pour désodoriser et refroidir un tissu

(30) Priority: 27.01.1987 IT 2064287 U
(43) Date of publication of application: 10.08.1988
(73) Proprietor: SPEROTTO RIMAR S.p.A., 36016 Thiene, Vicenza (IT)
(72) Inventor: Dalla Vecchia, Gino, I-36014 Santorso-Vicenza (IT)
(74) Representative: Fusina, Gerolamo

(56) References cited:
- FR-A- 1 518 597
- GB-A- 1 401 041
- US-A- 3 871 327
- US-A- 3 991 481

## Description

The present invention relates to an equipment for the closed-loop deodorization and cooling of a fabric in machines for continuous textile treatment with solvents.

It is known that when leaving machines wherein the continuous textile treatment with solvents is carried out, the dry fabric coming from the drying chamber entrains residual traces of solvent, which must be removed, and its temperature must be lowered down to values which allow it to be normally handled.

Such an operation is traditionally carried out in a purposely provided outlet section of the machine, by means of a so-said "washing" of the fabric with air from the surrounding environment, the air is subsequently treated with suitable separate activated charcoal filters, for recovering the solvent extracted from the fabric, and is then discharged again back to the external environment, in a purified condition.

Apparatuses working according to this operating system, the so-said "open-loop system", show the drawback of a causing the delivery, to the external environment surrounding the facility, of air, whose purity conditions may vary over time, as a function of the efficiency of the activated-charcoal filters wherein same air is treated.

Such apparatuses, furthermore, must provide for an activated-charcoal filters unit to be installed separately from the machine, for purifying air and recovering the solvent, with a consequent additional cost of investment, and additional operating costs.
From document DE-PS-652 132 a method and apparatus for the treatment of a fabric with solvents is known, said apparatus comprising a cooling chamber through which the incoming fabric web to be treated passes, a treatment vessel containing the solvent with which the fabric web is to be impregnated and a drying chamber in which the treated fabric web is heated and dried. An air channel between the treatment vessel and the cooling and drying chamber and through which the incoming and the treated fabric web pass in counter-current is connected, at one end, by means of a heater with the delivery manifold of a fan and, at the other end, by means of a cooling and condensation unit with the intake manifold of said fan. The air stream in said channel passes firstly through the treated fabric removing part of the solvent from it, which solvent is transferred in great part to the dry incoming fabric web. The partially dried fabric web is further dried in the drying chamber by heat and by means of heated air branched from the main stream in said air channel. This known apparatus thus performs mainly a drying system by removing from the treated wet fabric web the solvent after the impregnation stage.
From document DE-A-1 469 263 a method and device to finish, size, dye etc. a textile material with a chemical substance is further known, in which a fabric web coming from a treating apparatus enters a drying chamber to be dried therein by means of a drying air stream. In the drying chamber both a primary and a secondary air circulation are produced, wherein the primary air stream is cooled and its aim is to dry the fabric web, while the secondary air stream is heated and distributed on the fabric web by means of mutually opposed nozzles between which the web is guided to pass. There can be also installed an additional chamber after the drying process to remove residual traces of solvent from the fabric web.

The purpose of the present invention is to provide an equipment, such to carry out a closed-loop deodorization and cooling of a fabric, in correspondence of a purposely provided outlet section from machines for the continuous textile treatment with solvents, consisting in extracting the residual solvent retained by the fabric, without involving any discharges of air to the external environment surrounding said outlet section of the machine.

This, and further purposes according to the present invention are achieved by providing an equipment for the deodorization and cooling of a dry fabric coming from the drying chamber of a machine for the continuous treatment of the fabric with solvents, as defined in claim 1.

The characteristics and advantages of an equipment according to the present invention are better evidenced and understood from the following exemplifying, non-limitative disclosure thereof, made by referring to the related hereto attached schematic drawing.

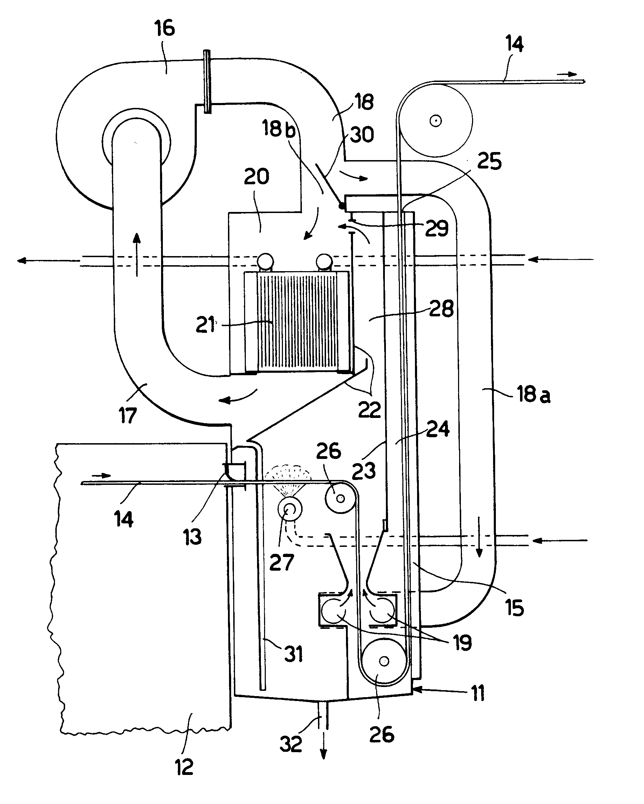

In the figure, an outlet section 11 of a machine for the continuous textile treatment with solvents is shown, sad outlet section 11 being connected with a drying chamber 12, partially shown, through an air-tight louver 13, e.g., a louver of the so-said "eyelid type", through which a continuous fabric 14 to be deodorized and cooled passes.

The outlet section 11 is essentially constituted by an external container case 15, with which an intake manifold 17 and a delivery manifold 18 are connected, which are operatively connected, at their other end, with an electric fan 16, for air recycling.

More precisely, the delivery manifold 18 is connected by means of a first branch thereof 18a, with a couple of air distribution boxes 19, opposite to each other, and, by means of a second branch thereof 18b, with a further container case 20, defined by related separation walls 22, inside which a heat-exchange cooling unit 21 is housed.

In the region of connection of the delivery manifold 18 with its branches 18a and 18b, an adjustable butterfly valve 30 is installed, which is capable of selecting the air flow towards the two internal areas inside the external container case 15.

The intake manifold 17 is furthermore essentially connected with said further container case 20.

Inside said external container case 15 of the outlet section 11, besides the couple of air distribution boxes 19 and the further container case 20, a separation wall 23 is provided, which defines a channel 24, inside which the fabric 14 passes, after being treated, along its end route towards an outlet opening 25.

The fabric 14, guided along the route inside the outlet section 11 by a set of rollers 26, passes first in correspondence of a steam injection means 27, such as a pipe positioned transversely to the distribution of travelling of the same fabric, and fed with steam by an outer steam source, and is subsequently introduced between the couple of air distribution boxes 19, which in such case also act a means for tightly sealing the duct 24 towards the external environment.

Such an arrangement of the further container case 20 and of the channel 24 also defines a further channel 28, which connects the portion of the external container case, wherein the steam injection pipe 27 and the couple of air distribution boxes 19 are contained, with the further case 20 by means of a connection opening 29 provided on the separation walls 22 of this latter.

A device according to the invention is used in machines for continuous textile treatment as follows. The fabric 14, containing residual traces of solvent, and coming from the drying chamber 12 through the louver 13, when entering the outlet section 11 is crossed by a steam jet distributed by the pipe 27, positioned beneath it, in a transversal position, in the direction of its width. The function performed by said steam jet is of extracting from the fabric 14 the residual traces of solvent, making them evaporate as an azeotropic mixture with steam. Said mixture of steam and solvent vapour which is thus formed, is entrained by the air stream flowing upwards from the distribution boxes 19, and is conveyed, through the channel 28 and the opening 29, inside the further container case 20, wherein it is forced to flow through the cooling unit 21, acting as a purification means.

The effect of the cooling carried out by the unit 21 is to cause steam and solvent vapour, which are contained in the recycled air, to condense. The condensation products are thus collected on the bottom of said further container case 20 and are sent, through drain pipes 31 and 32, to a collection and separation vessel (not shown in the Figure).

On the contrary, the air cooled in the same way, is intaken again through the intake manifold 17 by the fan 16, and a portion thereof is recycled by this latter, by being delivered again back to the air distribution boxes 19 through the manifold 18 and its branch 18a.

By means of the adjustable butterfly valve 10, and the branch 18b of the manifold 18, a portion of said air can be continuously recycled through the cooling unit 21, such to further decrease its temperature, and make it possible the fabric 14 to be efficaciously cooled.

In fact, the fabric 14 is licked up in counter-current by the cold air recycled by the fan 16, which extractes the vapour fumes entrained by the fabric 14, and causes, at the same time, the cooling of said fabric.

The fabric 14, along its end route towards the outlet opening leading to the outside 25, runs along the channel 24, isolated from the remainder of the outlet section 11, so that the internal turbulence is prevented from causing fumes to escape from the treatment machine.

Thus, the herein proposed equipment solves the problem of the emissions of air to the external environment surrounding the facility, and leads to a substantial simplification of said facility, both from a technical, and from an economic point of view.

## Claims

1. Equipment for the deodorization and cooling of a dry fabric (14) coming from the drying chamber (12) of a machine wherein a continuous treatment of the fabric with solvents is carried out, to remove residual traces of solvent entrained by said dry fabric (14) and to reduce its temperature, comprising an external container case (15) inside which said dry fabric (14), fed in continuous from said drying chamber (12) of the machine, is contacted with air, said air being intaken towards the outside of said external container case (15) and being made to pass through purification means (21), whereby said external container case (15) is connected, in closed-loop configuration, by means of an intake manifold (17) and a delivery manifold (18), with an electrically driven fan (16), that between an air outlet opening (29) of said external container case (15) and the inlet of said intake manifold (17) a cooling and condensation unit (21) is provided to act as said purification means, characterised in that the outlet of said delivery manifold (18) is connected to a couple of mutually opposed air distribution boxes (19) provided inside said external container case (15) in a lower portion of it, that in said lower portion of said external container case (15) steam injection means (27) are further provided upstream of said air distribution boxes (19) with respect to the direction of running of the fabric (14), in such a manner that the dry fabric (14) entering the external container case (15) is guided by means of guide rollers (26) to pass first over said steam injection means (27) to be crossed by the steam jet distributed by said means (27) and to pass subsequently between said couple of air distribution boxes (19) in counter current to the air flow distributed by said boxes (19) and flowing upwards to said air outlet opening (29), and that an isolated channel (24) is provided leading to a fabric outlet opening (25) inside which the treated fabric (14) coming out from between the couple of air distribution boxes (19) is guided to pass along its end route towards said fabric outlet opening (25), wherein said couple of distribution boxes (19) acts as means for tightly sealing said channel (24) towards the external environment.

2. Equipment according to claim 1, characterised in that said cooling and condensation unit (21) is housed in a further container case (20) connected with said intake manifold (17), said further container case (20) having separation walls (22) and being disposed together with said air distribution boxes (19) inside said external container case (15), in which a separation wall (23) is further provided, which defines said channel (24) for the passage of the treated fabric (14) towards said fabric outlet opening (25), and a further channel (28) connecting said lower portion of the external container case (15) with said air outlet opening (29) which is provided on said separation walls (22) of said further container case (20).

## Patentansprüche

1. Anlage des Desodorierung und Kühlung eines trockenen Gewebes (14), das aus einer Trocknungskammer (12) einer Maschine kommt, in der eine fortlaufende Behandlung des Gewebes mit Lösungsmitteln durchgeführt wird, um die Rückstände des Lösungsmittels, die dem trockenen Gewebe (14) anhaften, zu entfernen und um seine Temperatur zu vermindern, mit einem äußeren Gehäuse (15), innerhalb dessen das trockene Gewebe (14), das von der Trocknungskammer (12) der Maschine laufend zugeführt wird, mit Luft in Berührung gebracht wird, wobei diese Luft auf die Außenseite des äußeren Gehäuses (15) zugeführt und veranlaßt wird, durch eine Reinigungsvorrichtung (21) zu strömen, wobei das äußere Gehäuse (15) in einer geschlossenen Schleife mit Hilfe eines Einlaß-Verteilers (17) und eines Auslaß-Verteilers (18) mit einem elektrisch angetriebenen Gebläse (16) in Verbindung steht, und wobei zwischen einer Luftauslaßöffnung (29) des äußeren Gehäuses (15) und dem Einlaß des Einlaßverteilers (17) eine Kühl- und Kondensationseinheit (21) vorgesehen ist, die als die erwähnte Reinigungsvorrichtung wirkt, **dadurch gekennzeichnet**, daß der Auslaß des Auslaßverteilers (18) mit mehreren, sich wechselseitig gegenüberliegenden Luftverteilerkästen (19) verbunden ist, die innerhalb des äußeren Gehäuses (15) in dessen unteren Teil vorgesehen sind,
daß in diesem unteren Teil des äußeren Gehäuses (15) stromaufwärts der Luftverteilerkästen (19) in bezug auf die Laufrichtung des Gewebes (14) Dampf-Injektionsvorrichtungen (27) vorgesehen sind, und zwar so, daß das trockene Gewebe (14), das in das äußere Gehäuse (15) eintritt, mit Hilfe von Führungsrollen (26) so geleitet wird,
daß es zunächst über die Dampf-Injektionsvorrichtungen (27) hinweggeleitet wird, damit es von dem Dampfstrom durchquert wird, der aus der Vorrichtung (27) ausströmt, und daß das Gewebe anschließend zwischen mehreren Luftverteilerkästen (19) im Gegenlauf zur Luftströmung vorbeiläuft, die aus den Kästen (19) ausströmt und die nach oben zu der Luftauslaßöffnung (29) strömt, und
daß ein isolierter Kanal (24) vorgesehen ist, der zu einer Gewebe-Auslaßöffnung (25) führt, innerhalb der das behandelte Gewebe (14), das zwischen der Anzahl von Luftverteilerkästen (19) herauskommt, so geführt wird, daß es längs seines Endweges in Richtung auf die Auslaßöffnung (25) geleitet wird, wobei die Anzahl von Luftverteilerkästen (19) als Vorrichtung zum dichten Abschließen des Kanals (24) in bezug auf die äußere Umwelt dient.

2. Anlage nach Anspruch 1, **dadurch gekennzeichnet**, daß die Kühl- und Kondensationseinheit (21) in einem weiteren Gehäuse (20) sitzt, das mit dem Einlaß-Verteiler (17) verbunden ist, wobei das weitere Gehäuse (20) Trennwände (22) hat, und zusammen mit den Luftverteilerkästen (19) innerhalb des äußeren Gehäuses (15) angeordnet ist, in dem ferner eine Trennwand (23) vorgesehen ist, die den Kanal (24) zum Durchlaß des behandelten Gewebes (14) in Richtung auf die Gewebe-Auslaßöffnung (25) bildet, sowie ein weiterer Kanal (28), der den unteren Teil des äußeren Gehäuses (15) mit der Luftauslaßöffnung (29) verbindet, die an den Trennwänden (22) des weiteren Gehäuses (20) vorgesehen ist.

## Revendications

1. Equipement pour la désodorisation et le refroidissement d'un tissu sec (14) provenant d'une chambre de séchage (12) d'une machine dans laquelle un traitement continu du tissu est effectué à l'aide de solvants, pour supprimer les traces résiduelles du solvant entraîné par ledit tissu sec (14) et pour réduire sa température, comprenant un enveloppe (15) externe de conteneur à l'intérieur de laquelle ledit tissu sec (14), alimenté en continu depuis ladite chambre de séchage (12) de la machine, est placé au contact de l'air, ledit air étant amené en direction de l'extérieur de ladite enveloppe (15) externe de conteneur, et traversant des moyens de purification (21), selon lequel ladite enveloppe (15) externe de conteneur est raccordée, selon une configuration en boucle fermée, au moyen d'un collecteur d'admission (17) et d' un collecteur de décharge (18), à un ventilateur (16) entraîné électriquement et, entre une ouverture (29) de sortie d'air de ladite enveloppe (15) externe de conteneur et l'entrée dudit collecteur d'admission (17), un ensemble de condensation et de refroidissement (21) est prévu pour servir de moyen de purification, caractérisé en ce que la sortie dudit collecteur de décharge (18) est raccordée à un couple de distributeurs d'air (19) mutuellement opposés prévus à l'intérieur de ladite enveloppe (15) externe du conteneur dans une partie inférieure de celle-ci, en ce que dans ladite partie inférieure de ladite enveloppe (15) externe du conteneur, des moyens d'injection (27) de vapeur sont, en outre, prévus en amont desdits distributeurs d'air (19) par rapport au sens de passage du tissu (14) d'une manière telle que le tissu sec (14) pénétrant dans ladite enveloppe (15) externe du conteneur est guidé au moyen de rouleaux de guidage (26) pour passer d'abord sur lesdits moyens d'injection de vapeur (27) pour être traversé par le jet de vapeur distribué par ledit moyen (27) et pour passer, ensuite, entre ledit couple de distributeurs d'air (19) à contre-courant par rapport au courant d'air distribué par lesdits distributeurs (19) et circulant vers le haut en direction de ladite ouverture de sortie d'air (29), et en ce qu'un canal isolé (24) est prévu conduisant à une ouverture de sortie du tissu (25) à l'intérieur de laquelle le tissu traité (14) sortant entre le couple de distributeurs (19), est guidé pour passer le long de sa trajectoire d'extrémité en direction de ladite ouverture de sortie du tissu (25), et selon lequel ledit couple de distributeurs (19) agit comme moyen pour assurer l'étanchéité dudit canal (24) par rapport à l'environnement extérieur.

2. Equipement selon la revendication 1, caractérisé en ce que ledit ensemble de refroidissement et de condensation (21) est logé dans une autre enveloppe (20) de conteneur raccordée audit collecteur d'admission (17), ladite autre enveloppe (20) de conteneur comportant des parois de séparation (22) et étant placée avec lesdits distributeurs d'air (19) à l'intérieur de ladite enveloppe (15) externe du conteneur, dans laquelle une paroi de séparation (23) est, en outre, prévue, qui définit ledit canal (24) pour le passage du tissu traité (14) en direction de ladite ouverture de sortie du tissu (25), et un autre canal (28) raccordant ladite partie inférieure de ladite enveloppe (15) externe du conteneur à ladite ouverture de sortie d'air (29) qui est prévue sur lesdites parois de séparation (22) de ladite autre enveloppe (20) de conteneur.
